# FASCICULE DE BREVET EUROPEEN

(11) **EP 1 482 127 B1**
(45) Date de publication et mention de la délivrance du brevet: **19.07.2006**
(21) Numéro de dépôt: 04291200.6
(22) Date de dépôt: 11.05.2004
(51) Int. Cl.: F01D 11/00, F01D 9/02, F02K 1/80, F02C 7/28, F16J 15/32

(54) **Système d' étanchéité du flux secondaire à l' entrée d'une tuyère d'une turbomachine avec chambre de post-combustion.**
Dichtungssystem für den Nebenstrom am Einlass der Nachbrennerdüse einer Turbomaschine
Sealing system for the bypass flow at the inlet of the afterburner nozzle of a turbomachine

(30) Priorité: 27.05.2003 FR 0306390
(43) Date de publication de la demande: 01.12.2004
(73) Titulaire: SNECMA, 75015 Paris (FR)
(72) Inventeur: Lapergue Guy, 77950 Rubelles (FR); Sevi Guillaume, 94200 IVRY-SUR-SEINE (FR); Roche Jacques, 91090 Lisses (FR)
(74) Mandataire: Barbin le Bourhis, Joël

(56) Documents cités:
- DE-A- 4 408 260
- US-A- 5 101 624
- US-A- 5 222 692
- US-A- 5 560 198
- US-A- 5 897 120
- US-A1- 2003 046 940

## Description

L'invention concerne les problèmes de refroidissement des volets primaires des turbomachines d'aviation à faible taux de dilution équipées de chambres de post-combustion.

Elle concerne plus précisément une turbomachine d'aviation comportant en aval de la turbine une chambre de post-combustion prolongée par au moins une tuyère, ladite chambre étant délimitée radialement par une chemise de protection thermique disposée à l'intérieur d'un carter, ledit carter et ladite chemise définissant un canal annulaire dans lequel circule en fonctionnement un flux secondaire froid, un diaphragme annulaire solidaire dudit carter étant disposé à l'extrémité aval dudit canal, ladite tuyère comportant une pluralité de volets articulés à l'extrémité amont dudit carter, chaque volet étant équipé sur sa face intérieure d'une plaque de protection thermique, délimitant avec ledit volet un passage destiné à être alimenté par un air de refroidissement délivré par ledit diaphragme.

Les moteurs militaires modernes fonctionnent avec des températures en sortie de turbine de plus en plus élevées, ce qui a pour effet d'occasionner des températures au niveau des volets de tuyère de plus en plus élevées lors des modes de fonctionnement en post-combustion. La limite de tenue en température des matériaux conventionnels est actuellement atteinte. Il est donc nécessaire, pour garantir la durée de vie des volets, de maintenir leur température à un niveau inférieur à ces limites.

L'augmentation de la température des volets a également pour effet d'augmenter la signature infrarouge des parties solides du moteur. Pour maintenir la discrétion de l'avion à un niveau acceptable, voire l'améliorer, il est également nécessaire de diminuer cette température.

L'utilisation de l'air du flux secondaire en aval de la chemise de protection thermique est le moyen qui n'entraîne pas de perte énergétique pour refroidir les volets de tuyère par convection.

Encore faut-il que la transmission de ce flux entre les parties fixes de la chambre de post-combustion et les parties mobiles de la tuyère se réalise de la manière la plus étanche possible.

Il est déjà connu, notamment par US 4 645 217, un joint d'étanchéité souple disposé entre le carter de la chambre de post-combustion et un manchon cylindrique mobile axialement et supportant les volets. Ce joint coulissant sur le manchon et fixé au carter est constitué de deux plaques superposées comportant des fentes axiales en alternance, et d'un tissu résistant aux hautes températures intercalé entre les deux plaques. Les extrémités des portions d'une plaque disposées entre deux fentes consécutives sont recourbées sur le bord de l'autre plaque pour renfermer le tissu. Ce document n'enseigne pas que ce type de joint puisse assurer une étanchéité satisfaisante entre une pièce annulaire fixe et un ensemble de volets articulés sur cette pièce.

En outre US 5 101 624 relève d'une turbomachine avec un joint qui raccorde la tuyère d'échappement avec la turbomachine de façon qu'un plénum d'air de refroidissement soit constitué entre les passages en amont et en aval du joint. Les passages sont étanches par pièces d'étanchéités en aval du plénum.

Le but de l'invention est de proposer une turbomachine telle que mentionnée en introduction dans laquelle les fuites d'air secondaire, notamment vers l'extérieur, entre le canal annulaire et les passages des volets sont éliminées pour éviter les pertes de performance du moteur.

Ce but est atteint par le fait que l'alimentation en air de refroidissement desdits passages est assurée par un conduit annulaire délimité extérieurement par un premier joint annulaire souple retenu, en fonctionnement, en appui coulissant sur la face interne aval du carter et sur la face interne amont des volets sous l'action de la pression du flux secondaire froid, et délimité intérieurement par un deuxième joint annulaire souple dont l'extrémité amont est fixée à la zone radialement intérieure du diaphragme et dont l'extrémité aval est en appui coulissant sur la face interne amont des plaques de protection.

Ainsi, le premier joint est retenu en fonctionnement sous l'action de la pression du flux secondaire en appui coulissant sur la face interne aval du carter et la face interne amont des volets, ce qui empêche des fuites du flux secondaire froid vers l'extérieur. Le positionnement de ce premier joint dépend évidemment du positionnement angulaire des volets, et des dilatations éventuelles des différentes pièces.

Pour assurer l'étanchéité entre le diaphragme et la chemise de protection thermique, il est avantageusement prévu un troisième joint annulaire souple entre ces deux pièces, ce troisième joint étant retenu en amont sur ledit diaphragme et son extrémité aval étant en appui coulissant sur ladite chemise de protection.

Chaque joint annulaire est constitué d'une pluralité de secteurs comportant chacun deux plaques superposées liées entre elles et décalées dans le sens circonférentiel afin que les bords de deux secteurs adjacents se chevauchent, chaque plaque présentant en aval une pluralité de fentes axiales obturées par une autre plaque.

Ces fentes s'étendent sur au moins la moitié de l'étendue axiale desdits joints, et les plaques des secteurs sont liées entre elles par soudage ou brasage.

Ces diverses dispositions des joints assurent une étanchéité parfaite des parois des joints, et la raideur souhaitée.

Le diaphragme est constitué d'un anneau de section en U dont les ailes s'étendent vers l'amont et dont l'âme comporte des orifices, l'aile radialement extérieure étant fixée sur le carter par des moyens ménageant entre ladite aile et ledit carter un interstice annulaire dans lequel loge avec jeu l'extrémité amont du premier joint.

Cette disposition assure le maintien de l'extrémité amont en fonctionnement sous l'action de la pression du flux secondaire.

En revanche, l'extrémité amont du deuxième joint est maintenue serrée entre une plaque de support et la face radialement intérieure de l'aile radialement intérieure au moyen de rivets de fixation de ladite plaque de support sur ladite aile.

L'extrémité amont du troisième joint est fixée sur la face radialement interne de la plaque de support par lesdits rivets, et lesdits rivets comportent des têtes en appui coulissant sur la face extérieure de la chemise de protection thermique.

Selon une autre caractéristique de l'invention, chaque plaque de protection thermique est fixée au volet associé au moyen d'un seul dispositif de fixation, ledit volet et ladite plaque étant mutuellement immobilisés en rotation autour dudit dispositif de fixation par un système de rail et glissière axiaux, ladite plaque de protection présentant, à son extrémité amont et sur sa face radialement intérieure, une surface convexe dans le sens axial permettant l'étanchéité par contact avec l'extrémité aval du deuxième joint sur toute la plage de fonctionnement angulaire de la tuyère.

D'autres avantages et caractéristiques de l'invention ressortiront à la lecture de la description suivante, faite à titre d'exemple et en référence aux dessins annexés dans lesquels :
- la figure 1 est une demi-coupe, selon un plan contenant l'axe de la turbomachine selon l'invention, de la partie arrière de la chambre de post-combustion et de la tuyère convergente divergente disposée dans le prolongement de la chambre de post-combustion ;
- la figure 2 montre à plus grande échelle, la partie amont du canal annulaire du flux secondaire et la partie aval de la tuyère ainsi que la disposition des joints souples entre ces deux parties ;
- les figures 3A à 3C sont des vues en perspective d'un secteur de joint ;
- la figure 4 est une coupe selon la ligne IV-IV de la figure 3 d'un secteur de joint ;
- la figure 5 est une vue dessous d'une plaque de protection thermique d'un volet ;
- la figure 6 est une vue de la face extérieure d'une plaque de protection thermique ;
- la figure 7 est une vue, prise de l'intérieur de la tuyère, d'un ensemble de volets primaires ; et
- la figure 8 est une coupe d'un ensemble de volets primaires prise selon la ligne VIII-VIII de la figure 7.

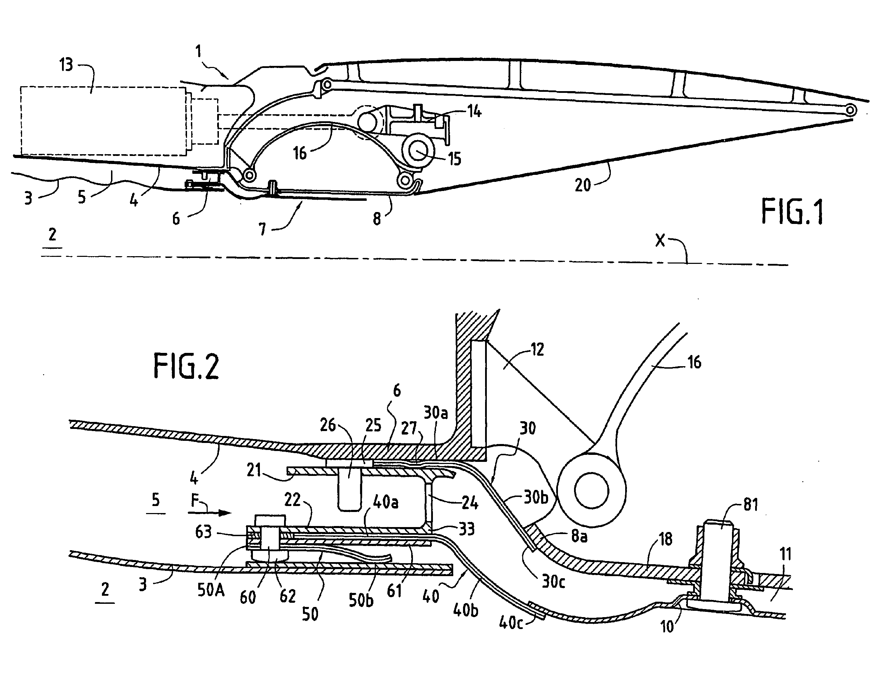

Les figures 1 et 2 montrent la partie arrière 1 d'une turbomachine d'aviation d'axe X, qui comporte en aval de la turbine, non montrée sur les dessins, une chambre de post-combustion 2 radialement délimitée par une chemise de protection thermique 3, elle-même disposée à l'intérieur d'un carter annulaire 4. La chemise 3 et le carter 4 délimitent entre eux un canal annulaire 5 dans lequel circule le flux secondaire F et qui comporte à son extrémité aval un diaphragme 6 solidaire du carter 4.

Une tuyère axisymétrique 7 est disposée en aval de la chambre de post-combustion 2.

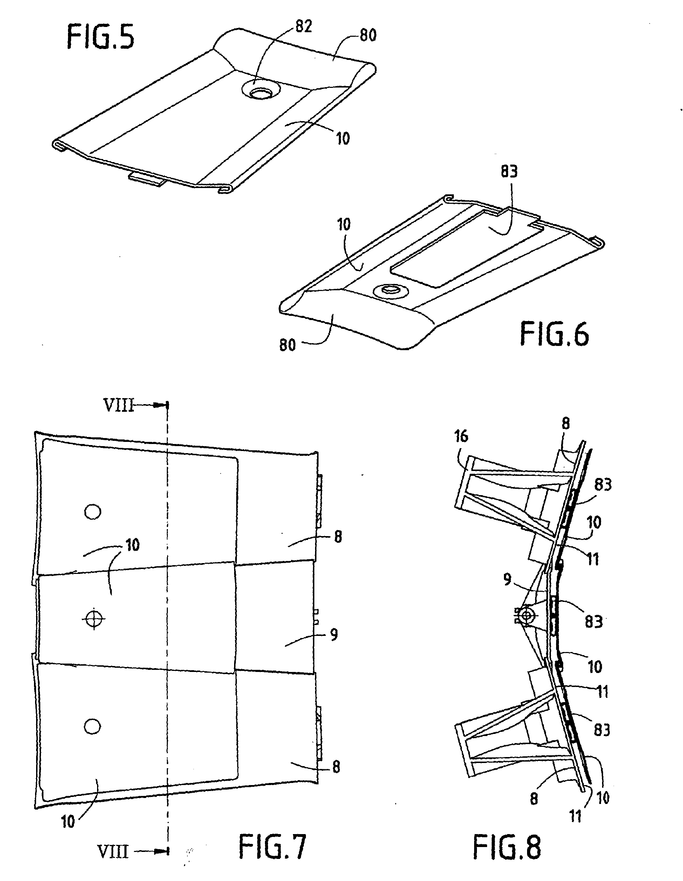

Cette tuyère 7 comporte notamment une pluralité de volets commandés 8 alternant avec des volets suiveurs 9 (voir les figures 7 et 8) qui présentent sur leurs faces internes des plaques de protection thermique 10. Les volets 8 et 9 et les plaques de protection 10 délimitent entre eux des passages 11 destinés à recevoir de l'air de refroidissement délivré par le diaphragme 6 qui formera un fil de protection en aval des plaques de protection thermique 10.

Les volets 8 et 9 sont articulés à leur extrémité amont sur des bras 12 solidaires du carter 4, et sont actionnés, par exemple, par des vérins 13 qui déplacent axialement un anneau de commande 14 présentant des galets 15 coopérant avec des surfaces de cames 16 prévues sur la face externe des volets commandés 8. D'autres moyens d'actionnement des volets primaires 8 et 9 peuvent être utilisés sans sortir du cadre de l'invention.

Sur la figure 1, on voit que la tuyère 7 comporte en aval des volets primaire 8, 9, une deuxième couronne de volets secondaires 20, afin de former une tuyère convergente divergente. Mais l'invention peut également s'appliquer à une tuyère uniquement convergente.

Ainsi que cela se voit plus clairement sur la figure 2, le diaphragme 6 est constitué d'un anneau de section en U renversé de 90°, dont les ailes 21 et 22 s'étendent axialement vers l'amont dans le canal 5, et dont l'âme 23 qui s'étend radialement comporte des orifices 24 de passage du flux secondaire F.

L'aile radialement extérieure 21 est fixée sur le carter 4, avec interposition d'un écarteur 25, sous forme de rondelles ou d'une bande, au moyen de moyens de fixation 26 de manière à définir en aval de l'écarteur un interstice annulaire 27 entre l'aile 21 et le carter 14.

L'aile radialement intérieure 22 est disposée en revanche à une distance appréciable de l'extrémité aval 3a de la machine de protection thermique 3 afin de permettre la fixation à cet endroit de deux joints d'étanchéité souples décrits plus loin dans le présent mémoire.

L'interstice 27 défini ci-dessus est destiné à recevoir avec jeu la partie amont 30a d'un premier joint d'étanchéité annulaire souple 30 dont la partie aval 30b se présente globalement sous la forme d'un cône convergent vers l'aval et dont l'extrémité 30c est en appui coulissant sur la portion amont 8a de forme arrondie des volets 8 et 9.

Il est à noter que le premier joint 30 peut se déplacer axialement, dans une certaine mesure, en fonction de sa raideur, et sous la pression du flux secondaire F circulant dans le canal annulaire 4 lorsque le moteur est en fonctionnement.

Cette disposition assure un appui positif de la partie amont 30a du premier joint 30 contre la face interne du carter 5 et l'appui positif de l'extrémité aval 30c du premier joint 30 contre la surface intérieure amont des volets 8 et 9, sur toute la plage angulaire de fonctionnement de la tuyère 7. Le premier joint 30 assure ainsi l'étanchéité entre le flux secondaire F et l'extérieur au niveau des articulations de la tuyère 7.

L'aile radialement intérieure 22 du diaphragme 6 retient l'extrémité amont 40a d'un deuxième joint annulaire souple 40 et l'extrémité amont 50a d'un troisième joint annulaire souple 50, au moyen d'une pluralité de rivets 60 traversant des orifices ménagés dans l'extrémité amont de ces joints 40 et 50, dans l'extrémité amont de l'aile 22, ainsi que dans une plaque de support annulaire 61 interposée entre le deuxième joint 40 et le troisième joint 50. Ces rivets 60 présentent des têtes 62 en appui coulissant contre la face extérieure de la chemise de protection thermique 3. Ils agissent à la manière de patins lors des dilatations axiales maximales de ladite chemise 3 et assurent également son centrage dans tous les modes de fonctionnement de la chambre de post-combustion.

L'extrémité amont 40a du deuxième joint 40 est interposée entre la plaque de support 61 et la face radialement intérieure de l'aile 22. De préférence, des rondelles 63 entourant les rivets 60 sont interposées entre la plaque de support 61 et l'aile 22 afin d'assurer un entrefer entre ces deux pièces dans lequel est introduite l'extrémité amont 40a du deuxième joint 40, cette extrémité amont 40a présentant des encoches coopérant avec les rondelles 63 pour positionner circonférentiellement avec précision ce deuxième joint 40.

Ce deuxième joint 40 présente également une partie aval 40b en forme de cône convergent vers l'aval et dont l'extrémité aval 40c vient en appui contre la face interne amont des plaques de protection thermique 10.

L'extrémité amont 50a du troisième joint 50 est fixée sur les rivets 60 et l'extrémité aval 50c de ce troisième joint est en appui coulissant sur la face externe de la chemise de protection thermique 3. Le rôle de ce troisième joint 50 est de garantir l'étanchéité entre le diaphragme 6 et la chemise de protection thermique 3.

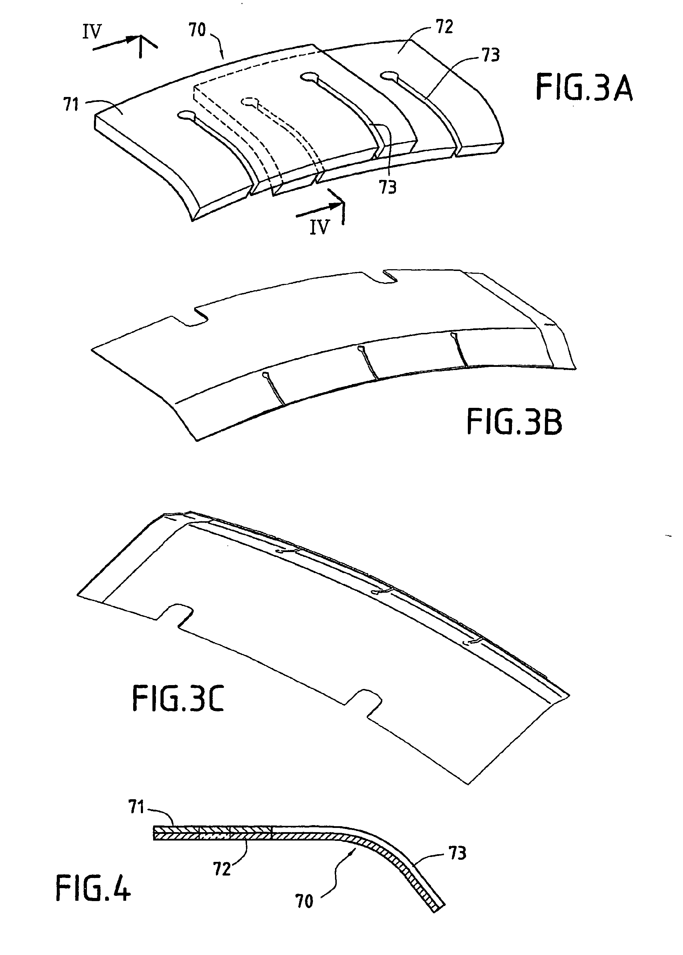

Les figures 3 et 4 montrent la configuration de chacun des joints 30, 40 et 50.

Chaque joint, ainsi que cela est montré sur les figures 3A à 3C, et à la figure 4, est constitué d'une pluralité de secteurs 70 se chevauchant partiellement dans le sens circonférentiel. Chaque secteur 70 est formé par la superposition de deux plaques de tôle 71 et 72, décalées circonférentiellement d'une distance correspondant au chevauchement de deux secteurs adjacents 70. Chaque plaque 71 et 72 est mise en forme dans des presses, puis est entaillée pour présenter des fentes 73 axiales sur sensiblement la moitié de leur étendue axiale. Ensuite, les deux plaques 71 et 72 formant un secteur 70 sont superposées avec un décalage circonférentiel afin que les fentes 73 et l'une quelconque de ces plaques alternent circonférentiellement avec les fentes de l'autre plaque, et sont liées rigidement entre elles, de préférence par soudage ou brasage. En revanche, les différents secteurs 70 ne sont pas liés entre eux, ce qui permet le changement aisé d'un secteur 70 en cas d'usure.

Pour obtenir l'étanchéité sur toute la plage angulaire de fonctionnement des volets 8 et 9 au niveau du deuxième joint 40 et des plaques de protection thermique 10 des volets 8 et 9, ces plaques de protection thermique 10 possèdent une forme appropriée au niveau de la surface 80 venant en contact avec l'extrémité aval 40c du deuxième joint 40.

Ainsi que cela est montré sur les figures 5 et 6, cette surface 80 est convexe dans le sens axial et légèrement concave dans le sens circonférentiel.

Chaque plaque de protection thermique 10 est fixée sur le volet correspondant 8 ou 9 par un seul point de fixation, par exemple au moyen d'une vis 81 noyée dans un empochement 82 de la plaque de protection 9, disposé dans la partie amont central de ladite plaque, qui constitue le pont fixe autour duquel ladite plaque 11 peut se dilater librement. Pour assurer son maintien latéral et radial, un rail de guidage 83 axial prévu sur sa face externe vient coopérer avec une glissière prévue sur la face intérieure du volet correspondant 8 ou 9.

## Revendications

1. Turbomachine d'aviation comportant en aval de la turbine une chambre de post-combustion (2) prolongée par au moins une tuyère (7), ladite chambre étant délimitée radialement par une chemise de protection thermique (3) disposée à l'intérieur d'un carter (4), ledit carter et ladite chemise définissant un canal annulaire (5) dans lequel circule en fonctionnement un flux secondaire, un diaphragme annulaire (6) solidaire dudit carter (4) étant disposé à l'extrémité aval dudit canal (5), ladite tuyère (7) comportant une pluralité de volets (8) articulés à l'extrémité amont dudit carter (4), chaque volet étant équipé sur sa face intérieure d'une plaque de protection thermique (10) délimitant avec ledit volet un passage (11) destiné à être alimenté par un air de refroidissement délivré par ledit diaphragme (6),
**caractérisée par le fait que** l'alimentation en air de refroidissement desdits passages (11) est assurée par un conduit annulaire délimité extérieurement par un premier joint annulaire (30) souple retenu, en fonctionnement, en appui coulissant sur la face interne aval du carter (4) et sur la face interne amont des volets (8) sous l'action de la pression du flux secondaire, et délimité intérieurement par un deuxième joint annulaire souple (40) dont l'extrémité amont (40a) est fixée à la zone radialement intérieure du diaphragme (6) et dont l'extrémité aval (30c) est en appui coulissant sur la face interne amont des plaques de protection (10).

2. Turbomachine selon la revendication 1, **caractérisée par le fait qu'**elle comporte en outre un troisième joint annulaire (50) souple pour assurer l'étanchéité entre le diaphragme (6) et la chemise de protection thermique (3), ce troisième joint étant retenu en amont sur le diaphragme (6) et son extrémité aval (40c) étant en appui coulissant sur ladite chemise de protection (3).

3. Turbomachine selon l'une des revendications 1 ou 2, **caractérisée par le fait que** chaque joint annulaire est constitué d'une pluralité de secteurs (70) comportant chacun deux plaques superposées (71, 72) liées entre elles et décalées dans le sens circonférentiel afin que les bords de deux secteurs adjacents se chevauchent, chaque plaque présentant en aval une pluralité de fentes axiales (73) obturées par une autre plaque.

4. Turbomachine selon la revendication 3, **caractérisée par le fait que** les fentes (73) s'étendent sur au moins la moitié de l'étendue axiale desdits joints.

5. Turbomachine selon l'une des revendications 4 ou 5, **caractérisée par le fait que** les plaques (71, 72) des secteurs (70) sont liées entre elles par soudage ou brasage.

6. Turbomachine selon l'une des revendications 1 à 5, **caractérisée par le fait que** le diaphragme (6) est constitué d'un anneau de section en U dont les ailes (21, 22) s'étendent vers l'amont et dont l'âme (23) comporte des orifices (24), l'aile radialement extérieure (21) étant fixée sur le carter (4) par des moyens ménageant entre ladite aile et ledit carter un interstice (27) annulaire dans lequel loge avec jeu l'extrémité amont (30a) du premier joint (30).

7. Turbomachine selon la revendication 6, **caractérisée par le fait que** l'extrémité amont (40a) du deuxième joint (40) est maintenue serrée entre une plaque de support (61) et la face radialement intérieure de l'aile radialement intérieure (22) au moyen de rivets de fixation (60) de ladite plaque de support (61) sur ladite aile (22).

8. Turbomachine selon les revendications 2 et 7, **caractérisée par le fait que** l'extrémité amont (50a) du troisième joint (50) est fixée sur la face radialement interne de la plaque de support (61) par lesdits rivets (60).

9. Turbomachine selon l'une des revendications 7 ou 8, **caractérisée par le fait que** lesdits rivets (60) comportent des têtes (62) en appui coulissant sur la face extérieure de la chemise de protection (3).

10. Turbomachine selon l'une quelconque des revendications 1 à 8, **caractérisée par le fait que** chaque plaque de protection thermique (10) est fixée au volet associé au moyen d'un seul dispositif de fixation (81), ledit volet (8) et ladite plaque (10) étant mutuellement immobilisés en rotation autour dudit dispositif de fixation par un système de rail (83) et glissière axiaux, ladite plaque de protection (10) présentant à son extrémité amont et sur sa face radialement intérieure, une surface (80) convexe dans le sens axial permettant l'étanchéité par contact avec l'extrémité aval (40c) du deuxième joint (40) sur toute la plage de fonctionnement angulaire de la tuyère (7).

## Claims

1. An aviation turbomachine comprising, downstream from the turbine, a post-combustion chamber (2) extended by at least one nozzle (7), said chamber being defined radially by a thermal protection lining (3) disposed inside a casing (4), said casing and said lining together defining an annular channel (5) in which, in operation, there flows a secondary flow, an annular diaphragm (6) secured to said casing (4) being disposed at the downstream end of said channel (5), said nozzle (6) comprising a plurality of flaps (8) hinged to the upstream end of said casing (4), each flap being fitted on its inside face with a thermal protection plate (10) cooperating with said flap to define a passage (11) for being fed with cooling air delivered by said diaphragm (6),
the turbomachine being **characterized by** the fact that the feed of cooling air to said passages (11) is provided by an annular duct defined on the outside by a first flexible annular gasket (30) retained, in operation, pressed in sliding contact against the downstream inside face of the casing (4) and against the upstream inside faces of the flaps (8) under urging from the pressure of the secondary flow, and defined on the inside by a second flexible annular gasket (40) whose upstream end (40a) is fixed to the radially inner zone of the diaphragm (6), and whose downstream end (30c) is pressed in sliding contact against the upstream inside face of the protection plates (10).

2. A turbomachine according to claim 1, **characterized by** the fact that it further includes a third flexible annular gasket (50) for providing sealing between the diaphragm (6) and the thermal protection lining (3), said third gasket being held upstream against the diaphragm (6) with its downstream end (40c) bearing slidably against said protection lining (3).

3. A turbomachine according to claim 1 or claim 2, **characterized by** the fact that each annular gasket is constituted by a plurality of sectors (70), each comprising two superposed plates (71, 72) connected together and offset in the circumferential direction so that the edges of two adjacent sectors overlap, each plate presenting, downstream, a plurality of axial slots (73) closed by another plate.

4. A turbomachine according to claim 3. **characterized by** the fact that the slots (73) extend over at least half the axial extent of said gaskets.

5. A turbomachine according to claim 3 or claim 4, **characterized by** the fact that the plates (71, 72) of the sectors (70) are connected together by welding or by brazing.

6. A turbomachine according to any one of claims 1 to 5, **characterized by** the fact that the diaphragm (6) is constituted by a channel section ring whose flanges (21, 22) extend upstream and whose web (23) includes orifices (24), the radially outer flange (21) being fixed to the casing (4) by means leaving an annular gap (27) between said flange and said casing, the upstream end (30a) of the first gasket (30) being received with clearance in said gap (27).

7. A turbomachine according to claim 6, **characterized by** the fact that the upstream end (40a) of the second gasket (40) is held clamped between a support plate (61) and the radially inside face of the radially inner flange (22) by means of rivets (60) fixing said support plate (61) to said flange (22).

8. A turbomachine according to claims 2 and 7, **characterized by** the fact that the upstream end (50a) of the third gasket (50) is fixed to the radially inside face of the support plate (61) by said rivets (60).

9. A turbomachine according to claim 7 or claim 8, **characterized by** the fact that said rivets (60) have heads (62) bearing slidably against the outside face of the protective lining (3).

10. A turbomachine according to any one of claims 1 to 8, **characterized by** the fact that each thermal protection plate (10) is fixed to the associated flap by means of a single fastener device (81), said flap (8) and said plate (10) being prevented from moving relative to each other in rotation about said fastener device by an axial slideway and rail system. (83), said protection plate (10) presenting at its upstream end and on its radially inside face a surface (80) that is convex in the axial direction, providing sealing by contact with the downstream end (40c) of the second gasket (40) over the entire annular operating of the nozzle (7).

## Patentansprüche

1. Flugzeug-Turbotriebwerk, das hinter der Turbine einen Nachbrenner (2) aufweist, der durch mindestens eine Düse (7) fortgesetzt wird, wobei dieser Nachbrenner in radialer Richtung von einem Wärmeschutzmantel (3) umgrenzt ist, der im Inneren eines Gehäuses (4) angeordnet ist, wobei dieses Gehäuse und dieser Mantel einen ringförmigen Kanal (5), bilden, in dem bei Betrieb ein kalter Nebenstrom zirkuliert, wobei am hinteren Ende dieses Kanals (5) eine mit diesem Gehäuse (4) fest verbundene ringförmige Scheidewand (6) angeordnet ist, wobei diese Düse (7) eine Vielzahl von Klappen (8) aufweist, die am vorderen Ende dieses Gehäuses (4) angelenkt sind, wobei jede Klappe an ihrer Innenseite mit einer Wärmeschutzplatte (10) versehen ist, die mit dieser Klappe zusammen einen Durchgang (11) umgrenzt, der dazu vorgesehen ist, mit Kühlungsluft gespeist zu werden, die von dieser Scheidewand (6) abgegeben wird,
**dadurch gekennzeichnet,**
**dass** die Versorgung dieser Durchgänge (11) mit Kühlungsluft durch eine ringförmige Leitung gewährleistet wird, die außen durch eine erste ringförmige, biegsame Dichtung (30) umgrenzt wird, die bei Betrieb unter der Einwirkung des Drucks des kalten Nebenstroms in Gleitanlage an der hinteren Innenseite des Gehäuses (4) und an der vorderen Innenseite der Klappen (8) festgehalten wird, und die innen durch eine zweite ringförmige, biegsame Dichtung (40) umgrenzt wird, deren vorderes Ende (40a) an dem radial inneren Bereich der Scheidewand (6) befestigt ist, und deren hinteres Ende (40c) sich in Gleitanlage an der vorderen Innenseite der Schutzplatten (10) befindet.

2. Turbotriebwerk nach Anspruch, 1,
**dadurch gekennzeichnet,**
**dass** es ferner eine dritte ringförmige, biegsame Dichtung (50) enthält, um die Dichtigkeit zwishen der Scheidewand (6) und dem Wärmeschutzemantel (3) zu gewährleisten, wobei diese dritte Dichtung vorn an der Scheidewand (6) festgehalten wird, und ihr hinteres Ende (50b) sich in Gleitanlage an diesem Wärmeschutzmantel (3) befindet.

3. Turbotriebwerk nach einem der Ansprüche 1 oder 2,
**dadurch gekennzeichnet,**
**dass** jede ringförmige Dichtung aus einer Vielzahl von Segmenten (70) gebildet ist, die jeweils aus zwei übereinanderliegenden Platten (71, 72) bestehen, welche miteinander verbunden und in der Richtung der Umfangslinie zueinander verschoben sind, damit die Ränder von zwei aneinandergrenzenden Segmenten sich überlappen, wobei jede Platte hinten eine Vielzahl von axial verlaufenden Schlitzen (73) aufweist, die von einer anderen Platte überdeckt werden.

4. Turbotriebwerk nach Anspruch 3,
**dadurch gekennzeichnet,**
**dass** die Schlitze (73) sich über mindestens die Hälfte der axialen Ausdehnung dieser Dichtungen erstrecken.

5. Turbotriebwerk nach einem der Ansprüche 3 oder 4,
**dadurch gekennzeichnet,**
**dass** die Platten (71, 72) der Segmente (70) durch Schweißen oder Löten miteinander verbunden sind.

6. Turbotriebwerk nach einem der Ansprüche 1 bis 5,
**dadurch gekennzeichnet,**
**dass** die Scheidewand (6) von einem Ring mit U-formigem Querschnitt gebildet wird, Schenkel (21, 22) sich nach vom erstrecken, und dessen Steg (23) Öffnungen (24) aufweist, wobei der radial äußere Schenkel (21) am Gehäuse (4) durch Mitzel befestigt ist, die zwischen diesem und diesem Gehäuse einen ringförmigen Zwischenraum (27) lassen, in dem das vordere Ende (30a) der ersten Dichtung (30) mit Spiel aufgenommen wird.

7. Turbotriebwerk nach Anspruch 6,
**dadurch gekennzeichnet,**
**dass** das vordere Ende (40a) der zweiten Dichtung (40) zwischen einer Halteplatte (61) und der radial innen liegenden Seite des radial inneren Schenkels (22) mittels Befestigungsnieten (60) zur Befestigung dieser Halteplatte (61) an diesem Schenkel (22) eingeklemmt gehalten wird.

8. Turbotriebwerk nach den Ansprüchen 2 und 7,
**dadurch gekennzeichnet,**
**dass** das vordere Ende (50a) der dritten Dichtung (50) an der radial innen liegenden Seite der Halteplatte (61) durch diese Nieten (60) befestigt ist

9. Turbotriebwerk nach einem der Ansprüche 7 oder 8,
**dadurch gekennzeichnet,**
**dass** diese Nieten (60) Köpfe (62) aufweisen, die sich in Gleitanlage an der Außenseite des Wärmeschutzmantels (3) befinden.

10. Turbotriebwerk nach einem der Ansprüche 1 bis 8,
**dadurch gekennzeichnet,**
**dass** jede Warmeschutzplatte (10) an der zugehörigen Klappe mittels einer einzigen Befestigungsvorrichtung (81) befestigt ist, wobei diese Klappe (8) und diese Plane (10) durch ein System aus axialer Schiene (83) und Gleitschiene zueinander drehfest um diese Befestigungsvorrichtung angeordnet sind, wobei diese Schutzplatte (10) an ihrem vorderen Ende und an ihrer radial innen liegenden Seite ein in axialer Richtung konvexe Oberfläche (80) aufweist, die die Dichtigkeit durch Kontakt mit dem hinteren Ende (40c) der zweiten Dichtung (40) über den gesamten Winkelbetriebsbereich der Düse (7) ermöglicht.
